(19)

Europäisches
Patentamt
European
Patent Office
Office européen
des brevets

(11) **EP 2 921 878 A1**

(12) **EUROPEAN PATENT APPLICATION**

(43) Date of publication:
**23.09.2015   Bulletin 2015/39**

(21) Application number: **14275075.1**

(22) Date of filing: **17.03.2014**

(51) Int Cl.:
**G01S 17/87** *(2006.01)*        **G01S 13/87** *(2006.01)*
**G01S 13/86** *(2006.01)*        **G01S 7/00** *(2006.01)*
**G01S 17/66** *(2006.01)*        **G01S 13/72** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **BAE Systems PLC
London SW1Y 5AD (GB)**

(72) Inventor: **The designation of the inventor has not
yet been filed**

(74) Representative: **BAE SYSTEMS plc
Group IP Department
Farnborough Aerospace Centre
Farnborough
Hampshire GU14 6YU (GB)**

(54) **Producing data describing target states**

(57)     Methods and systems for producing data describing target states using a processor (102) in a system (100) having at least one onboard sensor (106). The method includes obtaining data from an onboard sensor (106), obtaining data from an off-board sensor (108), approximating (312) an alignment error between the onboard and off-board sensor data, receiving alignment error data in respect of at least one other sensor set comprising at least two sensors, estimating (316) a bias using the received alignment error data and correcting the approximated alignment error using the bias, and performing (320) a data fusion process on the obtained off-board sensor data and the obtained onboard sensor data using the approximated alignment error to produce target state data.

Fig. 3

EP 2 921 878 A1

**Description**

The present invention relates to producing data describing target states, using a system having at least one onboard sensor, the system being in communication with at least one off-board co-operator also having at least one sensor.

Modern autonomous systems, such as autonomous vehicles, tend to be fitted with more and better sensors than in the past. Improved communications technology also means that more and better information can be relayed within the autonomous system and/or exchanged with a remote operator for the purpose of identifying or tracking targets.

Conventional systems for producing data describing target states depend on the ability of individual sensor platforms to cooperate together in groups and build an accurate local operational picture. The local pictures may then be fused in a higher level process to give a common operational picture from which information can be obtained.

However, attempts to connect groups of sensors and fuse their data have often encountered a common problem: that of poor alignment. The sensor platforms are subject to uncertainties regarding their location and orientation, both of the platform itself and of the sensors with respect to the platform; and their clocks are not in perfect synchronisation. These uncertainties lead to additional errors that, unless handled explicitly, can degrade the quality of the output from a conventional data fusion approach.

Solutions to the problem of alignment error have been proposed that extend the processes carried out in the data fusion centre, but they are subject to problems of practicality in present day and next generation systems as they are often more complex than conventional processes and, therefore, require prohibitively large amounts of processing. Furthermore, previously-proposed solutions require extra information to be communicated using onboard buses and off-board communications systems which currently have neither the capacity nor the message sets to provide such information. The quality of the solution can depend on the arrangement of targets within the field of interest, which is not usually controllable. Other known solutions require fixed targets or beacons, which are only available in certain environments and, once fixed, the platform to co-operator alignment error would gradually return over time when the sensor platform leaves the vicinity of the fixed targets or beacons.

Embodiments of the present invention are intended to address at least some of the problems outlined above.

According to a first aspect of the present invention, there is provided a method of producing data describing states of one or more targets using a processor in a system having at least one onboard sensor, the method including: obtaining first onboard sensor data representative of a target from said onboard sensor; obtaining first off-board sensor data representative of said target from a sensor of an off-board co-operator; approximating an alignment error between said first onboard sensor data and said first off-board sensor data; subsequently obtaining second onboard sensor data representative of said target from said onboard sensor and obtaining second off-board sensor data representative of said target from said off-board sensor; receiving alignment error data derived from said second onboard and off-board sensor data; estimating a bias using said received alignment error data and correcting said approximated alignment error using said bias; and performing a data fusion process on the obtained first off-board sensor data and the obtained first onboard sensor data using said corrected approximated alignment error to produce target state data.

As will be appreciated by a person skilled in the art, onboard and off-board tracks are created and maintained (solely) within each sensor platform's frame-of-reference. Thus, the method preferably includes associating track data obtained by said onboard sensor with corresponding track data from said off-board sensor to create an onboard/off-board track pair, and approximating said alignment error for said onboard/off-board track pair; and a preferred embodiment, includes creating a plurality of onboard/off-board track pairs in relation to a plurality of respective pairs of onboard and off-board sensors within the environment in which said system is operating, and approximating an alignment error in respect of each of said onboard/off-board track pairs. So, when the onboard/off-board tracks are compared, information about the relative alignment of the frames can be derived.

The alignment error is preferably approximated as an independent Cartesian bias in location between said onboard and off-board track data. The independent Cartesian approximation of the alignment error can be estimated in all circumstances given only the onboard and off-board sensor data for a single target, as defined above. This is not true of other data representations and gives the present invention a significant advantage over known approaches.

In a preferred embodiment, the method includes constructing an assignment matrix comprised of onboard/off-board track data associations, said assignment matrix being constructed using modelled alignment errors in respect of said onboard/off-board track pairs.

In this case, the method preferably includes selecting an optimal set of data associations from said assignment matrix, beneficially using a Munkres algorithm.

A preferred embodiment of the invention includes updating said estimated bias each time new off-board track data is associated with fused onboard track data; beneficially such updating of the estimated bias is performed using a moving average algorithm.

The target state data preferably includes descriptions of location and/or velocity of the targets.

Thus, the principle of a preferred embodiment of the present invention is that as a sequence of observations of the target by an onboard/off-board sensor pair is built up, and a sequence of alignment errors is calculated, the alignment errors are combined in a moving average estimator to give an overall alignment estimator, which becomes increasingly refined and accurate with each new observation pair.

The present invention extends to a computer program configured to execute a method described above.

According to a second aspect of the invention, there is provided a system having a processor and at least one onboard sensor, the system being configured to produce data describing states of one or more targets and including: a device configured to obtain first onboard sensor data from an onboard sensor; a device configured to obtain first off-board sensor data from a sensor of an off-board co-operator; a device configured to approximate an alignment error between said first onboard and off-board sensor data; a device configured to subsequently obtain second onboard sensor data representative of said target from said onboard sensor; a device configured to obtain second off-board sensor data representative of said target from said off-board sensor; a device configured to receive alignment error data derived from said second onboard and off-board sensor data; a device configured to estimate a bias using said received alignment error data and to correct said alignment error using said bias; and a device configured to perform a data fusion process on the obtained first off-board sensor data and the obtained first onboard sensor data using said approximated alignment error to produce target state data.

Such a system may comprise an at least partially autonomous vehicle.

The present invention offers a practical system which reduces alignment error in present day and next-generation systems with relatively simple augmentations to the data fusion process and using only the sensor and data link track reports and (for the latter source) co-operator self reports, all of which information is available, or at least obtainable, using existing hardware.

The present invention is suitable for use in a variety of different systems and environments, including:

- Alignment error reduction for co-operative processing of off-board data regarding point targets with full 3-D information with respect to the processing vehicle's local frame of reference.

- Present day sensing suites, including Navigation sensing by, for example, inertial navigation systems or global positioning systems.

- Military data communications and synchronisation.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways and, by way of example only, embodiments thereof will now be described, reference being made to the accompanying drawings in which:

Figure 1 is a schematic diagram of a vehicle with onboard sensors and a processor, as well as external targets;

Figure 2 is a schematic illustration of an architecture for another example system configured to produce data describing states of a plurality of targets; and

Figure 3 is a flow chart showing at a high-level operation of the example system.

The significant components of alignment error are orientation and location uncertainty, and poor time synchronisation between co-operating platforms. Each source of uncertainty gives rise to different errors. Orientation error makes the apparent locations of targets rotate around the sensor point of view. The magnitude of the error depends on both the magnitude of the misalignment and the distance from which the target was observed; and the direction in which the error is experienced depends on the location of the target relative to the observer. For targets observed at long range, this can be the dominant source of error.

Targets that are relatively close together will experience orientation errors of similar magnitude and direction, whilst targets that have no near neighbours will experience errors unique to themselves. The errors may be compounded by poor correlation and association decisions.

Each platform's uncertainty regarding its own location results in a corresponding error in each track report that it makes. The error is unaffected by the observation distance or the relative positions of the target and observer. For targets observed at relatively short range with high precision sensors, observer location uncertainty can introduce significant errors.

When time synchronisation is poor, the effect on track reports is to advance or retard them along the trajectory of the track. So, the errors depend on the target velocity vectors as well as the size of the synchronisation error. When a TDMA communications system is used, synchronisation is necessarily good (because the TDMA organisation and transmission slots are defined in terms of time) and the magnitude of these errors is small in relation to the other sources, even for hypersonic targets. For other data links, synchronisation need not be so good. TDMA has been chosen as the data link model for the following exemplary embodiment of the invention because it is the most common data link organisation for aircraft sharing the tactical picture.

When the two types of errors described above are combined, the total error picture for two observers reporting on, for example, three targets is confusing. Each target would be reported by the two observers in different positions due to the different alignment and location errors experienced by the observers. In addition to this, the tracking uncertainties would cause these positions to fluctuate from report to report. To be effective, the data fusion system must remove the confusion.

The assumed dominant components of the alignment error contribution from a single target update are summarised:

| Component | Properties | Time Variability | Target to Target Variability |
|---|---|---|---|
| INS Orientation | Predominantly error in perceived heading (yaw) giving a rotation in the horizontal plane. | The heading error oscillates slowly. Other errors are noisy and smaller. | Same rotation in azimuth about the observer point of view for all targets observed by a given platform. |
| Sensor orientation | This is manifested as a rotation with three degrees of freedom (yaw, pitch and roll). | Fixed for a given sensor and platform. | The mapping to spatial bias varies with target location within the sensor coverage. |
| GPS location | A shift in perceived observer location with three degrees of freedom (latitude, longitude and altitude). | Changes in steps when changes in GPS satellite constellation occur. | Between steps, the same for all targets observed by a given platform. |
| Synchronisation | Target location advanced or retarded along its trajectory. | Fixed. | Varies with target velocity. |

"Noisy" errors can be ignored because the conventional data fusion process reduces these provided due allowance is made for their presence in the error covariance matrix; leaving seven components that change sufficiently slowly over time and space to be appear as an approximate constant (actually, slowly changing) bias in the reported target location.

When this report is fused with on-board sensor data, the on-board data has its own alignment errors. Thus, any estimators based on a full mathematical expression for the alignment error bias in a single data fusion update would involve equations in 14 variables and this is not likely to lead to a practical algorithm. The present invention addresses this issue, amongst others, to provide an improved system which estimates and reduces alignment errors experienced by, for example, aircraft receiving target information from off-board sensors and fusing that information with on-board sensor data.

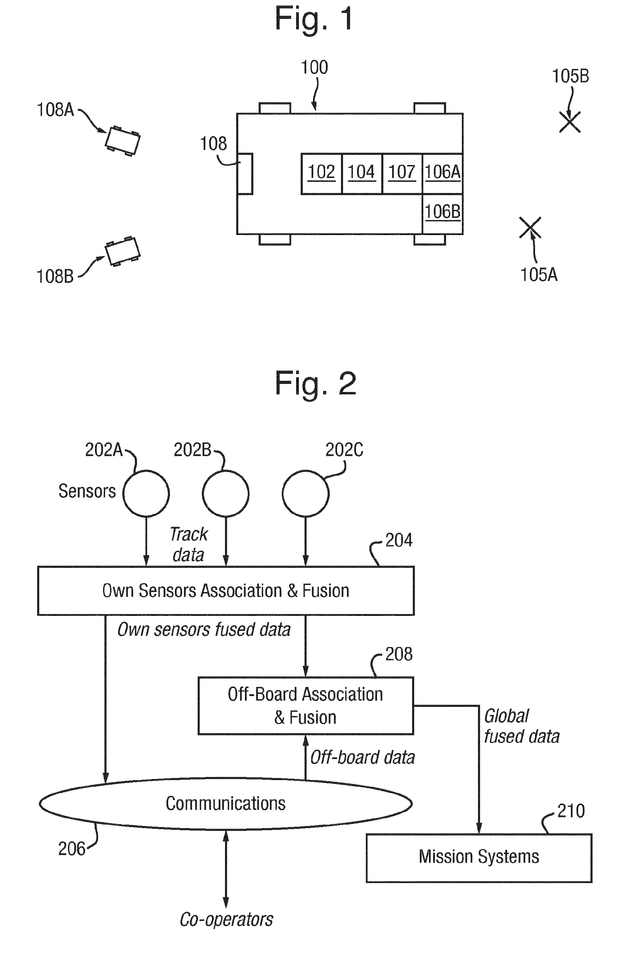

Figure 1 shows a vehicle 100 that is fitted with a computing device including a processor 102 and memory 104. The vehicle will also include other conventional features, e.g. steering and traction components, and may be at least partially automated and/or can include a planning system for assisting a human operator. The vehicle may be capable of travelling on/through land, air or water. The vehicle will also typically include communications devices for communicating with external systems, including other vehicles. It will be appreciated that the vehicle is only one example of a system having at least one onboard sensor that can be used to produce data describing states of targets and in alternative embodiments the system can comprise other types of devices, such as a hand-held tracking unit, for example.

The vehicle 100 is further fitted with at least one local onboard sensor. In the example the vehicle has a first local sensor 106A and a second local sensor 106B. The local sensors are configured to take measurements relative to the vehicle, typically to obtain information regarding obstacles/objects (which may be static or moving) in the vicinity of the vehicle. Such obstacles/objects shall be called "targets" herein and examples are shown schematically at 105A and 105B, but it will be understood that a target is not necessarily something at which a weapon is to be fired. Examples of suitable local sensors include visual, infra-red, RADAR or LIDAR type devices and the sensors can produce information regarding the range and/or angle to an object in the environment, but other types of output can be produced, e.g. estimated velocity of a moving object.

The processor 102 executes code that is intended to use data received directly or indirectly from at least one of the onboard sensors and combine it with data received indirectly from at least one off-board sensor (see below) in order to produce data describing the states of at least one sensed target. Examples of onboard sensor data used by the processor are given below, but it will be understood that the type of data can vary:

- Sensor number/identifier

- List update time

- Number of tracks

- Tracks

The track data type can include the following data, for example: Track number/identifier; Track update time; Track update class (e.g. no update, delete, 3_D track, line of sight, IFF response); Multiple target (Boolean); Manoeuvre parameter (magnitude of manoeuvre); Location; Velocity; Covariance (full location and velocity covariance matrix), and/or Environment (unknown, space, air, sea, subsurface).

The vehicle 100 further includes a communications interface 107 that is configured to communicate with remote devices. The remote devices take the form of two other vehicles 108A, 108B in the example, but it will be understood that the number and nature of the devices can vary. The data exchanged between the vehicle 100 and the remote devices 108 will normally include sensor-related data. Thus, the vehicle 100 can receive off-board sensor readings. If the off-board readings are not in the same format as those taken by its own sensors then the readings may be converted into a suitable format. Examples of off-board sensor data used by the processor are given below, but it will be understood that the type of data can vary:

- List update time

- Number of reports

- Track reports

The track report data type can include, for example: Extrapolation time; Update time; Report status (none, new track, delete track); Report class (unknown, co-operator self report, 3-D track, line of sight); Co-operator (e.g. remote device/vehicle identity) number; Track number; Update time valid (Boolean); Velocity valid (Boolean); Quality indicator valid (Boolean); Location; Velocity; Location quality indicator and/or Environment (unknown, space, air, land, sea, subsurface).

Figure 2 illustrates schematically the architecture of another example system having a set of onboard sensors 202A - 202C that transfer track data to data association and data fusion processes 204 that execute on an onboard processor. The system further includes a communications interface 206 that receives track data from at least one off-board sensor. The onboard data processes 204 generate fused data which may be transferred to the communications interface 206 for use by off-board processors on at least one remote device.

The fused data generated by the onboard data processes 204 can also be transferred to at least one onboard mission system 210 that can be used to control the vehicle, for example, based on the target state information that has been generated. For instance, the vehicle may be controlled in order to avoid the targets. Own state data from the vehicle's navigation system may also be taken into account during the data processing. Such data can include, for example,: Time; Location; Velocity; Acceleration; Attitude; Attitude rates of change; Heading; Magnetic heading; Expected plan position error; Expected vertical position error; Groundspeed, and/or Track.

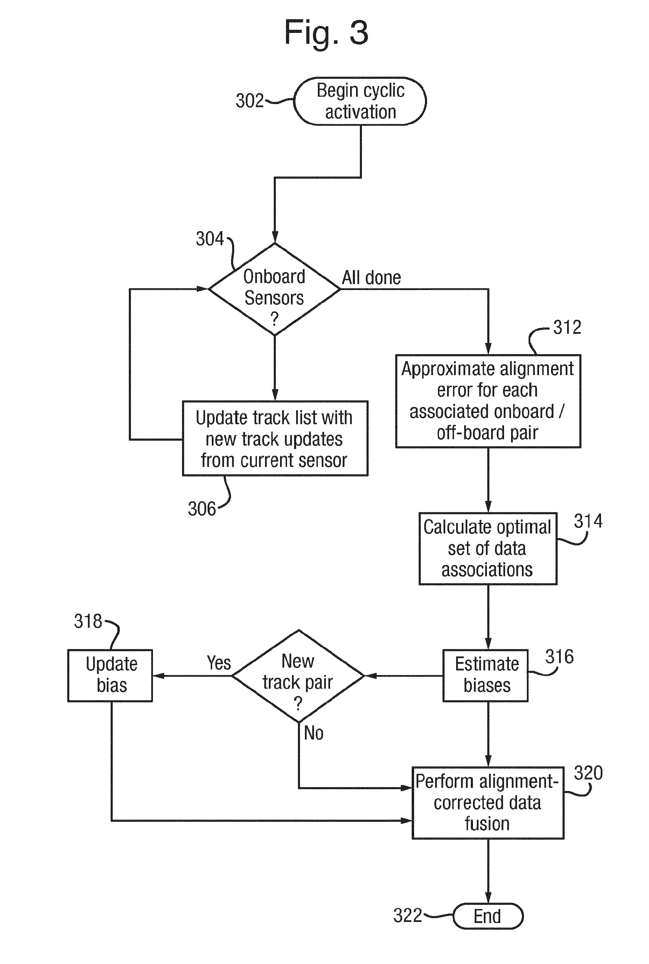

Figure 3 shows steps performed by the onboard data association and data fusion process 204. At step 302 cyclic operation of the target sensing system begins. At step 304 a check is performed as to whether track data from all of the onboard sensors has been received and processed. If not, then track update data from the first/next sensor is processed and the track list updated at step 306.

Once this step has been performed for all onboard sensors (that have generated updates), control is passed to step 312.

Onboard and off-board track data is configured as associated onboard/off-board track pairs. Thus, at step 312, alignment error is approximated as an independent Cartesian bias in location for each associated onboard/off-board track pair.

Next, at step 314, the optimal set of data associations is calculated using explicitly modelled alignment errors in the construction of an assignment matrix, and Munkres algorithm is used to find the optimal set of assignments.

At step 316, a moving average algorithm is used to estimate the biases and, each time an off-board track is assigned to a fused track, the bias estimate is updated at step 318.

Finally, at step 320, the alignment-corrected data fusion is performed, which results in an updated overall fused track list being output. The output list can be used directly by a processor, e.g. to control a vehicle, displayed to a user and/or used in some other way. The fused data generated may include the following:

- List update time

- Number of tracks

- Tracks

Where each track can include, for example: Local track number; Global track number; Group track number; Track update time; Track update class (e.g. no update, delete, 3_D track, line of sight, IFF response); Multiple target (Boolean); Manoeuvre parameter (magnitude of manoeuvre); Location; Velocity; Environment (unknown, space, air, land, sea, subsurface); and/or Covariance (full location and velocity covariance matrix).

The cyclic operation can end at step 322.

Thus, the present invention provides a data fusion method and system with enhanced data association and alignment error removal, and an exemplary algorithm for correcting track bias will now be described in more detail, using the following notation:

| Symbol | Meaning |
|---|---|
| $\delta N, \delta E, \delta D$ | The alignment bias error in the track North, East and Down coordinates respectively. |
| $\sigma_N^2, \sigma_E^2, \sigma_D^2$ | The variance of the bias error in the track North, East and Down coordinates respectively. |
| $\sigma_{\dot{N}}^2, \sigma_{\dot{E}}^2, \sigma_{\dot{D}}^2$ | The variance of the bias error in the track North, East and Down velocity components respectively. |
| $\sigma_{N_G}^2, \sigma_{E_G}^2, \sigma_{D_G}^2$ | The variance of the error in the track North, East and Down coordinates due to GPS differences. |
| $r, \theta, \psi$ | The polar track Range, Bearing and Elevation coordinates respectively. |
| $\sigma_{\theta_S}^2, \sigma_{\psi_S}^2$ | The variance of the error in the polar track Bearing and Elevation coordinates respectively due to sensor misalignments. |
| $\sigma_{\theta_I}^2$ | The variance of the error in the polar track Bearing coordinate due to INS heading errors. |

*Exponential Fading Memory Average - "Infinite" Window*

Given the bias sample b for a particular on-board, off-board track pair at time index k

$$\mathbf{b}(k) = \left\lfloor \delta N(k) \quad \delta E(k) \quad \delta D(k) \right\rfloor$$

$$B \approx \begin{bmatrix} \sigma_N^2 & & & & & \\ & \sigma_{\dot{N}}^2 & & & 0 & \\ & & \sigma_E^2 & & & \\ & & & \sigma_{\dot{E}}^2 & & \\ & 0 & & & \sigma_D^2 & \\ & & & & & \sigma_{\dot{D}}^2 \end{bmatrix}$$

The location error variances due to the Alignment bias...

$$\sigma_N^2 \approx r^2 \left( \sigma_{\theta_S}^2 + \sigma_{\theta_I}^2 \right) \sin^2 \theta \cos^2 \psi + r^2 \sigma_{\psi_S}^2 \cos^2 \theta \sin^2 \psi + \sigma_{N_G}^2$$

$$\sigma_E^2 \approx r^2 \left( \sigma_{\theta_S}^2 + \sigma_{\theta_I}^2 \right) \cos^2 \theta \cos^2 \psi + r^2 \sigma_{\psi_S}^2 \sin^2 \theta \sin^2 \psi + \sigma_{E_G}^2$$

$$\sigma_D^2 \approx r^2 \sigma_{\psi_S}^2 \cos^2 \psi + \sigma_{D_G}^2$$

The velocity errors due to sensor and Nav misalignment are very small. The steps in GPS location will create disruption to velocity estimates and allowance will be made for these.

$$\sigma_{\dot{N}}^2 \approx \frac{2}{\delta t^2} \sigma_{N_G}^2$$

$$\sigma_{\dot{E}}^2 \approx \frac{2}{\delta t^2} \sigma_{E_G}^2$$

$$\sigma_{\dot{D}}^2 \approx \frac{2}{\delta t^2} \sigma_{D_G}^2$$

The Moving Average is defined by the recursion:

$$\mathbf{c}_{ab}(k) = \alpha \mathbf{c}_{ab}(k-1) + (1-\alpha)\mathbf{b}(k)$$

$$C_{ab}(k) \approx \frac{1-\alpha}{1+\alpha} B \qquad \text{(For large values of } k\text{.)}$$

The parameter is defined $0 < \alpha < 1$.

The covariance matrix of the established estimator $C_{ab}$ reflects the level of uncertainty regarding the true bias and, given multiple onboard and off-board track updates, is greatly reduced when compared with B, the variance of the bias in a single sample.

**The Data Association Algorithm**

When platform b sends a track report to platform a, allowance must be made for the contribution to alignment error in both platforms. So, in an initial track to track association process prior to any alignment error correction, the Mahalanobis distance between the tracks is calculated:

$$d^2_{ab} = \mathbf{b}(k)^T U^{-1} \mathbf{b}(k)$$

$$U = P_a + P_b + B$$

The matrix of association distances is then calculated $\left[ D^2_{ab} \right]_{\forall a,b}$ where:

$$D^2_{ab} = \begin{cases} D^2_{\max} & \text{for} \quad d^2_{ab} > G \\ d^2_{ab} + \ln|U| + m \ln 2\pi - 2\ln p_0 & \text{otherwise} \end{cases}$$

G is a gate threshold from the $\chi^2_m$ distribution and the test rejects highly unlikely track pairs.

The Munkres algorithm then searches the possible solutions optimally to find the least cost sum set of associations from an allocation matrix $\left[ D^2_{ab} \right]_{\forall a,b}$.

The inventors have discovered that the use of the alignment bias covariance terms in the calculation of the residual error covariance matrix ($U = P_a + P_b + B$) ensures that the true associations are unlikely to be rejected as infeasible and the use of $D^2_{\max}$ in the formation of the allocation matrix has the effect of forcing the selection of the set of associations with maximum number of feasible source/fused track pairs. The inventors have further discovered that in the absence of highly structured clutter and provided the probability of detection and tracking of the targets in question is high on at least one of the platforms, these features of the algorithm maximise the likelihood that the true set of associations is chosen.

***Alignment-Corrected Data Fusion***

In a fusion process where correction of the alignment bias is attempted:

$$P^{-1} = P_a^{-1} + \left( P_b + C_{ab} \right)^{-1}$$

$$P^{-1}\mathbf{x} = P_a^{-1}\mathbf{x_a} + \left( P_b + C_{ab} \right)^{-1}\left( \mathbf{x}_b - \mathbf{c}_{ab} \right).$$

Again, the fused estimate is **x** and $P$ is its covariance matrix; and $\mathbf{c}_{ab}$ is an estimate of the correction required to translate $\mathbf{x}_b$ to the axis set of platform $a$, and $C_{ab}$ is its covariance matrix. This estimate should be free from bias because the error in $\mathbf{c}_{ab}$ should be zero-mean noise. It will be appreciated this example uses a very simple fusion algorithm with independent errors $x_a$ and $x_b$, but the invention can be extended to more sophisticated data fusion algorithms.

Thus, the present invention addresses the estimation and reduction of alignment errors experienced by aircraft receiving target information from off-board sensors and fusing that information with onboard sensor data. The algorithms produced by the system minimise errors and maximise the likelihood that an off-board designated target is matched correctly with onboard sensor detections. Each member of a Network Enabled Capability (NEC) group corrects the alignment of data from other sources with respect to its own particular alignment, with the aim that its own situation awareness is maximised and, consequently, the quality of the data it provides to other co-operators is also maximised.

**Claims**

1. a method of producing data describing states of one or more targets using a processor in a system having at least one onboard sensor, the method including:

   obtaining first onboard sensor data representative of a target from said onboard sensor;
   obtaining first off-board sensor data representative of said target from a sensor of an off-board co-operator;
   approximating an alignment error between said first onboard sensor data and said first off-board sensor data;
   subsequently obtaining second onboard sensor data representative of said target from said onboard sensor and obtaining second off-board sensor data representative of said target from said off-board sensor;
   receiving alignment error data derived from said second onboard and off-board sensor data;
   estimating a bias using said received alignment error data and correcting said approximated alignment error using said bias; and
   performing a data fusion process on the obtained first off-board sensor data and the obtained first onboard sensor data using said corrected approximated alignment error to produce target state data.

2. A method according to claim 1, including associating track data obtained by said onboard sensor with corresponding track data from said off-board sensor to create an onboard/off-board track pair, and approximating said alignment error for said onboard/off-board track pair.

3. A method according to claim 2, including creating a plurality of onboard/off-board track pairs in relation to a plurality of respective pairs of onboard and off-board sensors within the environment in which said system is operating, and approximating an alignment error in respect of each of said onboard/off-board track pairs.

4. A method according to any of the preceding claims, wherein said alignment error is approximated as an independent Cartesian bias in location between said onboard and off-board track data.

5. A method according to claim 3, including constructing an assignment matrix comprised of onboard/off-board track data associations, said assignment matrix being constructed using modelled alignment errors in respect of said onboard/off-board track pairs.

6. A method according to claim 5, including selecting an optimal set of data associations from said assignment matrix.

7. A method according to claim 6, wherein said optimal set of data associations is selected using a Munkres algorithm.

8. A method according to claim 3, including updating said estimated bias each time new off-board track data is associated with fused onboard track data.

9. A method according to claim 8, wherein said bias is estimated using a moving average algorithm.

10. A method according to any of the preceding claims, wherein the target state data includes descriptions of location and/or velocity of the targets.

11. A computer program configured to execute a method according to any of claims 1 to 10.

12. A system having a processor and at least one onboard sensor, the system being configured to produce data describing states of one or more targets and including:

   a device configured to obtain first onboard sensor data from an onboard sensor;
   a device configured to obtain first off-board sensor data from a sensor of an off-board co-operator;
   a device configured to approximate an alignment error between said first onboard and off-board sensor data;
   a device configured to subsequently obtain second onboard sensor data representative of said target from said onboard sensor;
   a device configured to obtain second off-board sensor data representative of said target from said off-board sensor;

a device configured to receive alignment error data derived from said second onboard and off-board sensor data;
a device configured to estimate a bias using said received alignment error data and to correct said alignment error using said bias; and
a device configured to perform a data fusion process on the obtained first off-board sensor data and the obtained first onboard sensor data using said approximated alignment error to produce target state data.

13. A system according to claim 12, wherein the system comprises an at least partially autonomous vehicle.

# Fig. 1

# Fig. 2

# Fig. 3

302 — ( Begin cyclic activation )

304 — ◇ Onboard Sensors ? ◇ — All done

Update track list with new track updates from current sensor
306

312 — Approximate alignment error for each associated onboard / off-board pair

Calculate optimal set of data associations — 314

318 — Update bias ← Yes ← ◇ New track pair ? ◇ ← Estimate biases — 316

No

Perform alignment-corrected data fusion — 320

322 — ( End )

Europäisches
Patentamt

European
Patent Office

Office européen
des brevets

**EUROPEAN SEARCH REPORT**

Application Number

EP 14 27 5075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/026417 A1 (BAE SYSTEMS PLC [GB]; NICHOLSON DAVID [GB]; COURONNEAU NICOLAS [GB]) 11 March 2010 (2010-03-11) | 12 | INV. G01S17/87 G01S13/87 |
| Y | * figure 5 * <br> * abstract * <br> * page 1, line 18 - line 19 * <br> * page 3, line 12 - line 14 * <br> * page 7, line 6 - line 8 * <br> * page 7, line 18 - line 21 * <br> ----- | 1-11,13 | G01S13/86 G01S7/00 G01S17/66 G01S13/72 |
| Y | EP 2 343 672 A1 (BAE SYSTEMS PLC [GB]) 13 July 2011 (2011-07-13) <br> * figure 1 * <br> * abstract * <br> ----- | 1-11,13 | |

TECHNICAL FIELDS
SEARCHED      (IPC)

G01S

The present search report has been drawn up for all claims

| Place of search | Date of completion of the search | Examiner |
|---|---|---|
| Munich | 15 September 2014 | Alberga, Vito |

EPO FORM 1503 03.82 (P04C01)

**ANNEX TO THE EUROPEAN SEARCH REPORT
ON EUROPEAN PATENT APPLICATION NO.**

EP 14 27 5075

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2014

| Patent document cited in search report | Publication date | Patent family member(s) | Publication date |
|---|---|---|---|
| WO 2010026417 A1 | 11-03-2010 | AU 2009289008 A1 <br> CA 2735787 A1 <br> EP 2332017 A1 <br> US 2012030154 A1 <br> WO 2010026417 A1 | 11-03-2010 <br> 11-03-2010 <br> 15-06-2011 <br> 02-02-2012 <br> 11-03-2010 |
| EP 2343672 A1 | 13-07-2011 | NONE | |

EPO FORM P0459

For more details about this annex : see Official Journal of the European Patent Office, No. 12/82